# EUROPEAN PATENT SPECIFICATION

(11) **EP 1 627 527 B1**
(45) Date of publication and mention of the grant of the patent: **28.01.2009**
(21) Application number: 04735286.9
(22) Date of filing: 28.05.2004
(51) Int. Cl.: H04N 5/74, H04N 9/31, G02B 26/08

(54) **ILLUMINATION SYSTEM FOR VIDEOPROJECTOR UTILIZING ONE OR MORE LED DIODES MATRICES**
VIDEOPROJEKTOR-BELEUCHTUNGSSYSTEM MIT EINER ODER MEHREREN LEUCHTDIODENMATRIZEN
SYSTEME D'ECLAIRAGE POUR VIDEOPROJECTEUR FAISANT APPEL A UNE OU PLUSIEURS MATRICES DE DIODES ELECTROLUMINESCENTES

(30) Priority: 28.05.2003 IT TO20030393
(43) Date of publication of application: 22.02.2006
(73) Proprietor: SIM2 Multimedia S.p.A., 33070 Pordenone (IT)
(72) Inventor: FRISON, Renato, I-33083 Chions (IT)
(74) Representative: Dini, Roberto
(86) International application number: PCT/IB2004/001746
(87) International publication number: WO 2004/107751

(56) References cited:
- EP-A- 0 985 952
- US-A- 5 504 514
- US-A1- 2003 086 148
- US-B1- 6 224 216

## Description

The simultaneous use of mechanical miniaturization and technologies peculiar to semiconductors has led to the realization of small electromechanical systems, such as DMD (Digital Micromirror Device), LCD (Liquid Crystal Display), and LCoS (Liquid Crystal on Silicon), which are widely utilized in the manufacture of small size and light weighing videoprojectors, ensuring high quality images.

Briefly, a DMD device or panel consists of a set of small aluminum square mirrors with 16 µm sides, each one forming an element of the image to be projected, i.e. a pixel. The mirrors can rotate around a diagonal; rotation in either direction is produced by two electrodes located under the mirror in opposite positions with respect to axis of rotation. If the mirror is rotated in one direction, the light hitting it is reflected in a way that it does not enter the projection lens, so it is not sent to the screen, i.e. the pixel is "off"; if rotation occurs in the opposite direction the pixel is "on", since the reflected light is sent to the screen.

In LCD and LCoS devices a pixel consists of a layer of liquid crystals enclosed between two plates or electrodes parallel to each other; when a light beam is sent to a plate, the amount of light crossing the layer can be controlled through the voltage applied to the electrodes and with the use of appropriate polarizers. In the "transmission" type devices, usually LCD, both the electrodes are transparent; therefore, the light beam enters a plate, the controlled beam goes out from the other plate and is sent to the screen. In the "reflection" type devices, generally LCoS, one plate is transparent and the other reflecting; therefore, the light beam is sent to the transparent plate, the controlled beam is reflected towards the same plate and sent to the screen.

The pixel set forms the active surface of the panel, on which the image to be projected is formed.

According to the brightness and screen size being requested, a videoprojector can use one or more devices, obviously of the same type.

The choice of the illumination system is particularly important with reference to the performance and reliability of a videoprojector.

Arc lamps are normally used, which release a high light intensity, though they have a few non irrelevant drawbacks. First of all, the average life of a lamp is rather short, requiring frequent interventions of the Service Assistance and a consequent financial cost for the user. Moreover, the lamp produces considerable heat inside the videoprojector (usually over 100 W), so an adequate cooling system is needed to avoid jeopardizing the product reliability. Other drawbacks caused by the lamps are the crystallization phenomena impairing the light flow quality, and the so-called arc-jump, which may cause flickering of the image. Finally, as known, in the videoprojectors using one device alone, either DMD, LCD or LCoS, the primary colors are obtained filtering the light emitted by the lamp with the color wheel, which is often a source of annoying noise caused by the motor actuating the wheel, and above all reduces the system brightness.

In order to obviate to the above drawbacks, a light source consisting of one or more LED (Light Emitting Diode) diodes matrixes has been proposed; this solution removes all the above drawbacks; in particular, the average life of the LED diodes estimated in about 100.000 hours, is considerably longer than the life of a lamp. Moreover, the light radiation of the LED diodes has a wider color triangle than that obtained through a standard arc lamp with associated color wheel; therefore, when using one device alone, the chromatic result is better, i.e. several color tones can be reproduced.

However, since the diodes emission does not occur uniformly within the emitting angle (intensity is maximum in the middle and decreasing towards the ends) and, additionally, empty spaces forcedly exist between the diodes, the beam emitted by a matrix is not homogeneous; this entails a considerable light reduction, which is not acceptable, particularly when the videoprojectors have to be manufactured for large screens.

For instance, document EP 0 985 952 A discloses a liquid crystal projector composed of a luminous device, a parallel-conversion optical system, an optical switch, and a display optical system, said luminous device comprising a plurality of LEDs arrayed lengthwise and crosswise; output beams from said plurality of LEDs are converted into parallel beams through a plurality of lenses or lens arrays.

Document US-B-6 224 216 relates to a multimedia projector wherein the light emitted from blue, green, and red generally monochromatic LEDs or LED arrays is propagated along separate respective optical paths through optical fibres. A display controller receives image data from a personal computer and converts the data to colour frame sequential data delivered to respective separate display devices whose output is coupled into a combiner. The display controller synchronizes the data between the separate display devices to form a composite image.

Document US 2003/086148 A1 discloses a projector having an illuminating optical system for irradiating white light, a colour wheel for dividing the white light irradiated by the illuminating optical system into red, green and blue colour lights in a time-division manner, a DMD for modulating the respective colour lights in accordance with an image signal, a projection optical system for projecting the light beam modulated by the DMD, a light-composite optical system for getting the light beam not incident on the projection optical system to be incident again on the DMD and a device for controlling the operation of the projector.

Document US-A-5,504,514 relates to an optic system for illuminating a spatial light modulator array in a xerographic printing process consisting of an array of LED emitters constructed to efficiently replace the conventional tungsten source used in prior art. The array of LED emitters can be geometrically configured or electrically operated by strobing or varying the brightness of individual pixels to compensate for other system optical deficiencies and results in improved printing process. By exposure strobing the LED source correction for fuzzy line edges can be achieved.

It is the object to the present invention to provide an illumination system with LED diodes, which obviates to the above drawbacks and ensures the manufacture of high reliability and long duration videoprojectors, which, at the same time, are capable of reaching high performances.

In order to reach such aims it is the object of the present invention to provide an optic system of illumination incorporating the features described in the annexed claims, which form an integral part of the description herein.

Further objects and advantages of the present invention will become apparent from the following detailed description and annexed drawings, which are supplied by way of non limiting example, wherein:
- Fig. 1 shows a first embodiment of an illumination system according to the invention;
- Fig. 2 shows a few details of the illumination system according to the invention;
- Fig.3 shows a second embodiment of an illumination system according to the invention;
- Fig. 4 shows a third embodiment of an illumination system according to the invention.

The blocks indicating the same reference number in the various figures perform the same function.

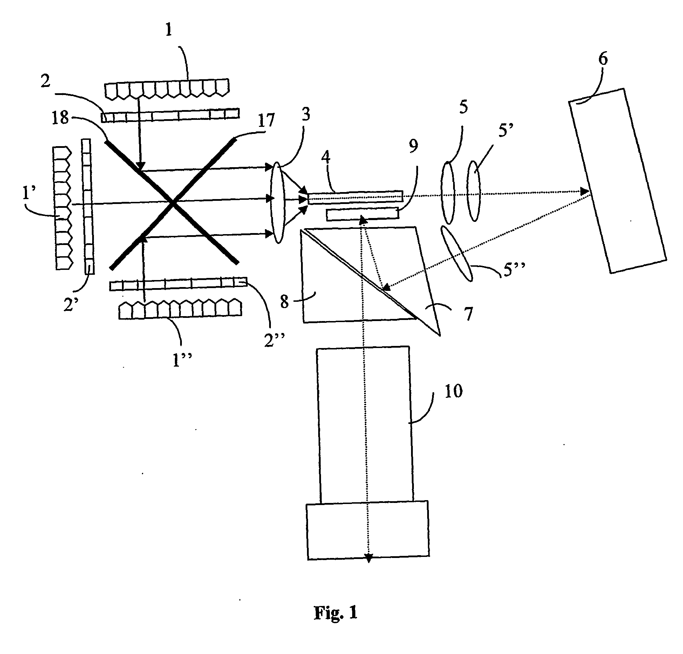

Figure 1 is representing an illumination system according to the present invention, wherein the videoprojector uses one DMD device alone; however, the present invention can be also applied for applications using LCD or LcoS devices. The blocks identified with reference 1, 1' and 1" represent a top view of three different bi-dimensional matrixes, each one of them with LED diodes having the same primary color: for instance, matrix 1 consists of LED diodes emitting red color light, matrix 1' has LED diodes emitting green color light and matrix 1" LED diodes emitting blue color light.

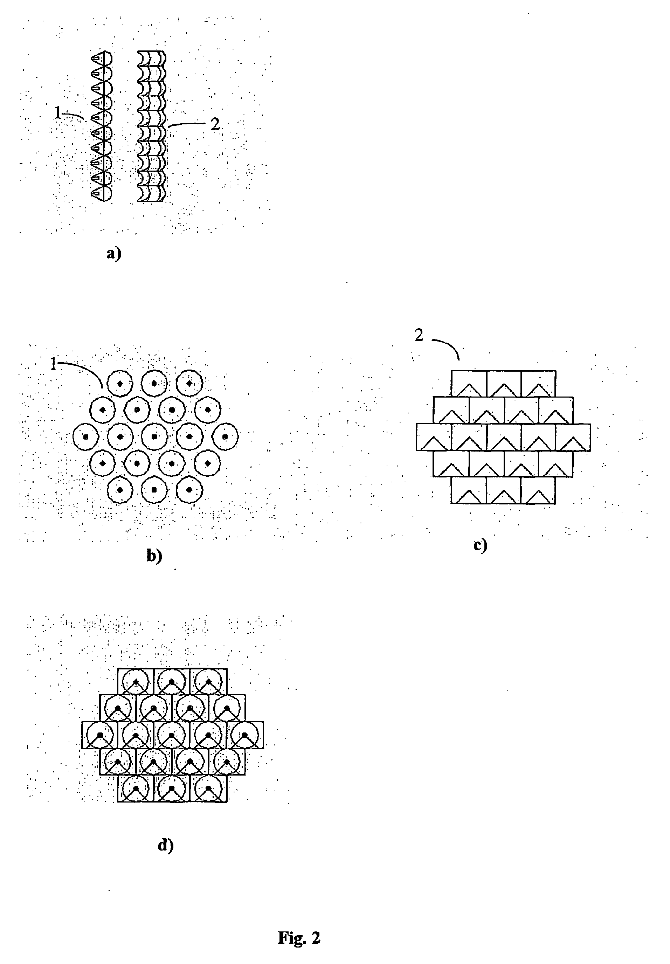

In order to ensure an even and efficient collection of the light produced by the matrixes and obtain a homogeneous parallel light beam, three integrating systems are used, each one for each matrix, as represented in Figure 1 with reference numbers 2, 2' and 2". An integrator is formed by a set of small rectangular integrating lenses, each one facing a corresponding matrix diode, as schematically illustrated in Figure 2 illustrating the matrix 1 and to the associated integrating system 2. In particular, Figure 2a) illustrates a side view of the matrix 1 and integrator 2; Figure 2b) illustrates a front view of some diodes of matrix 1; Figure 2c) illustrates a front view of some integrating lenses forming the integrator 2, and Figure 2d) illustrates a front view of the diodes matrix 1 and integrator 2 as a whole. Obviously, the representation of Figure 2 applies to the matrixes 1' and 1" and integrators 2' and 2", too. Each integrator lens has a focal distance equaling the distance that separates it from the associated LED; in order to optimise the illumination, it is preferable to use rectangular integrating lenses, wherein the ratio between the greater side and the minor side equal the ratio of the relevant sides of the device employed, in this case of the DMD; therefore, the preferred values of such a ratio will be 4:3 or 16:9.

The light emitted by the diodes of the three matrixes 1, 1' and 1" is collected by the corresponding integrating systems 2, 2' and 2", which have at their outlet three homogeneous parallel light beams meeting a pair of dichroic filters, 17 and 18, crossed at 90°. The choice of the dichroic filters 17 and 18 occurs in such a way to send the three monochromatic beams at the output of the integrating systems 2, 2' and 2" in one sole direction. In the instance of Figure 1, both filters let the color of the parallel light beam at the output of matrix 1' go through, e.g. green, whereas the filter 17 reflects the color of the parallel light beam at the output of matrix 2", e.g. blue, letting the color of the parallel light beam at the output of matrix 2 go through, e.g. red. The filter 18 reflects the color of the parallel light beam at the output of matrix 2, e.g. red, letting the color of the parallel light beam at the output of matrix 2" go through, e.g. blue. Based on this filters selection, the parallel light beam at the output of matrix 2' will continue straight on through the two dichroic filters 17 and 18 and reach the aspheric condenser 3, while the parallel light beams at the output of the other two matrixes 2 and 2" are reflected by the first dichroic filter they meet, 18 and 17 respectively, so the reflected beam is parallel to the light beam at the output of matrix 2'.

The three light beams are collected by the aspheric condenser 3 which focuses the light at the inlet of integrating bar 4, consisting of an optic glass parallelepiped, which uniforms the light beam at the output of the condenser.

The light at the output of the integrating bar is collected by a lens and mirror system, which, in the case under test, has 3 convergent lenses known as relay lens, indicated with references 5, 5' and 5", and a mirror indicated with reference 6. Theses lenses convey the light towards the DMD device, indicated with reference 9, whereon a focused image is being formed, which appears enlarged with respect to the image at the output of the integrating bar. The optical path from the integrating bar to the device 9, indicated in the figure by dotted lines and arrows, undergoes 2 deflections: a first deflection due to a reflecting surface, in this case the mirror 6, and a second deflection due to the prism indicated with the reference number 7. This prism, which conveys the light beam towards the DMD device, is of the kind known as TIR (Total Internal Reflection), therefore it has the property of reflecting, like a mirror, all the incident light beams having an angle typical of the chosen prism. The light beam reflected by the DMD device goes through the prism 7 without being reflected, since the incidence angle between the light beam and the prism walls is such to avoid a reflection of said beam. Since the beam reflected by the DMD device is in reality a set of beams originated by the LED's of the activated matrix, each one of these beams follows slightly different paths with consequent delays between the single beams; in order to correct these delays, a prism indicated with reference number 8 is interlaid between the prism 7 and the projection lens indicated with reference number 10, which projects the image on a screen not shown in Figure 1.

The three diodes matrixes 1, 1' and 1" turn on and off in a sequential mode, so every instant only one matrix is activated and the light beams corresponding to the three primary colors are sequentially sent to the DMD; thus, the color wheel is no longer necessary while the optic system acquires a higher efficiency; as a result, for a contrast equal to that of illumination systems with lamp, a lower brilliancy of the light source, i.e. of the LED diodes, is required. For instance, using LED diodes with a light intensity of 7 cd for red, 10 cd for green and 3 cd for blue, a good illumination is obtained through the adoption of 240 LED circular matrixes, with a total consumption of about 43 W for all three matrixes. As a result, a considerable brilliancy is obtained with a low amount of heat dissipated inside the videoprojector.

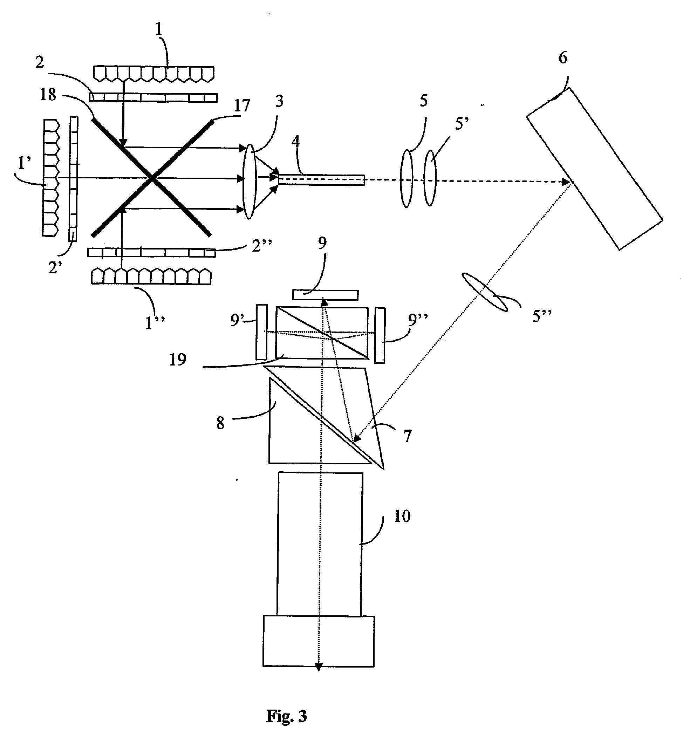

Figure 3 is representing an illumination system according to the present invention, in case of a videoprojector with three DMD devices, indicated with reference numbers 9, 9' and 9". In this configuration, the three diodes matrixes 1, 1' and 1" are always on and the aspheric condenser 3 is reached by a light beam consisting of the three primary colors. In order to obtain colored images, a set of prisms, indicated with reference 19, splits the light beam in the three primary components which are sent to the relevant DMD devices, and resets the beams reflected by the DMD devices in one sole light beam that is sent to the projection lens 10 through the prisms 7 and 8.

The present invention can be applied to videoprojectors for both front and rear projection following some simple arrangements known to the man skilled in the technical branch.

It is clear that many changes can be made to the illumination system according to the present invention without exiting from the novelty principles of the inventive idea.

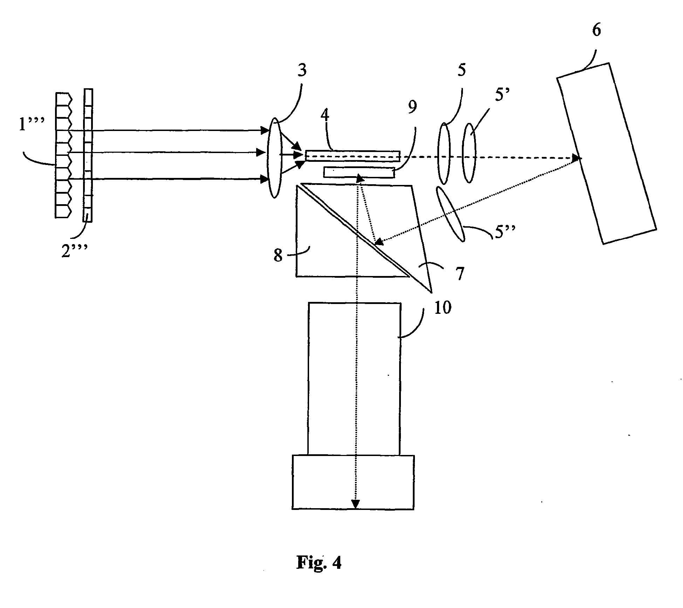

In those instances, where the videoprojector is not requested to emit a very high brilliancy, one device alone can be used, such as a DMD illuminated by one LED diodes matrix emitting a white light with a relevant integrating system, as shown in the Figure 4 with reference 1'" and reference 2"', respectively. A white light LED matrix consists of a set of triads, each one of them formed by three LED diodes corresponding to the three primary colors, red, green and blue, which can be activated separately. Therefore, the color image is obtained activating the triad diodes in sequence, such as lighting first the diodes with green light, then the ones with red light and, finally, the ones with blue light. Thus, the device is reached sequentially by three monochromatic light beams corresponding to the three primary colors.

## Claims

1. An illumination system for videoprojector using a light source, which consists of at least a LED (Light Emitting Diode) diodes matrix (1, 1', 1", 1"') comprising a plurality of LED diodes, said illumination system having an integrating system (2, 2', 2", 2"') comprising a plurality of integrating lenses, said integrating system (2, 2', 2", 2"') being interlaid between said diodes matrix (1, 1', 1", 1"') and a subsequent focusing system (3, 4, 5, 5', 5", 6), each LED diode being associated to an integrating lens,
**characterized in that**
said integrating lens has a focal distance substantially equal to the distance separating said integrating lens from said associated LED diode, and **in that** said focusing system (3, 4, 5, 5', 5", 6) comprises:
- an aspheric condenser (3) apt to focus a light beam formed by said diodes matrix (1, 1', 1", 1"') at the inlet of an integrating bar (4), and
- a lens and mirror system (5, 5', 5", 6) apt to collect the light beam at the output of said integrating bar (4) and to convey said light beam towards an image forming device (DMD, LCD, Lcos) positioned downstream of said focusing system (3,4,5 , 5', 5", 6), said lens and mirror system (5, 5', 5", 6) comprising at least a convergent lens (5, 5', 5"), in particular a relay lens, and a mirror (6).

2. An illumination system for videoprojector according to claim 1, **characterized in that** said videoprojector uses at least one (9) DMD device (Digital Micromirror Device).

3. An illumination system for videoprojector according to claim 1, **characterized in that** said videoprojector uses three (9, 9', 9") DMD devices (Digital Micromirror Device).

4. An illumination system for videoprojector according to claim 1, **characterized in that** said videoprojector uses at least an LCD device (Liquid Crystal Device).

5. An illumination system for videoprojector according to claim 1, **characterized in that** said videoprojector uses three LCD devices (Liquid Crystal Device).

6. An illumination system for videoprojector according to claim 1, **characterized in that** said videoprojector uses at least an LcoS device (Liquid Crystal on Silicon).

7. An illumination system for videoprojector according to claim 1, **characterized in that** said videoprojector uses three LcoS devices (Liquid Crystal on Silicon).

8. An illumination system for videoprojector according to claim 1, **characterized in that** the ratio between the sides of said integrating lens equals the ratio between the sides of the active surface of the used device.

9. An illumination system for videoprojector according to claim 8, **characterized in that** said ratio between the sides is 4:3.

10. An illumination system for videoprojector according to claim 8, **characterized in that** said ratio between the sides is 16:9.

11. An illumination system for videoprojector according to claim 1, **characterized in that** it employs three diode matrixes (1, 1', 1", 1"').

12. An illumination system for videoprojector according to claim 11, **characterized in that** each diode matrix (1, 1', 1", 1"') emits a light beam corresponding to a primary color (RGB).

13. An illumination system for videoprojector according to claim 12, **characterized in that** said light beams emitted by said diodes matrixes (1, 1', 1", 1'") and integrated by corresponding integrating lenses hit two dichroic filters (17, 18) placed substantially at 90 degrees.

14. An illumination system for videoprojector according to claim 1, **characterized in that** it uses at least a diodes matrix (1"') capable of emitting white light.

15. An illumination system for videoprojector according to claim 14, **characterized in that** said diodes matrix (1"') consists of a plurality of triads, each one comprising three LED diodes, each LED diode emitting a light beam corresponding to a different primary color.

16. An illumination system for videoprojector according to claim 15, **characterized in that** said LED diodes of each triad can be activated one by one.

17. An illumination system for videoprojector according to claim 15, **characterized in that** each triad is associated to an integrating lens.

18. An illumination system for videoprojector according to claim 1, **characterized in that** said videoprojector is used to perform a front projection.

19. An illumination system for videoprojector according to claim 1, **characterized in that** said videoprojector operates in rear projection.

## Patentansprüche

1. Ein Beleuchtungssystem für Videoprojektoren unter Verwendung einer Lichtquelle, das aus mindestens einer Leuchtdiodenmatrix (1, 1', 1", 1"') besteht, die eine Vielzahl von Leuchtdioden umfasst, wobei das Beleuchtungssystem ein integrierendes System (2, 2', 2", 2"') aufweist, das eine Vielzahl von integrierenden Linsen umfasst, wobei das integrierende System (2, 2', 2", 2"') zwischen die Diodenmatrix (1, 1', 1", 1"') und ein nachfolgendes Fokussierungssystem (3, 4, 5, 5', 5", 6) gelegen ist, wobei jede Leuchtdiode zu einer integrierenden Linse gehört,
**dadurch gekennzeichnet, dass**
die integrierende Linse eine Brennweite aufweist, die im Wesentlichen gleich dem Abstand ist, der die integrierende Linse von der zugehörigen Leuchtdiode trennt, und **dadurch**, dass das Fokussierungssystem (3, 4, 5, 5', 5", 6) Folgendes umfasst:
- einen asphärischen Kondensator (3), der geeignet ist, einen von der Diodenmatrix (1, 1', 1", 1"') gebildeten Lichtstrahl am Eingang eines integrierenden Stabes (4) zu fokussieren, und
- ein Linsen- und Spiegelsystem (5, 5', 5", 6), das geeignet ist, den Lichtstrahl am Ausgang des integrierenden Stabes (4) zu sammeln und den Lichtstrahl zu einem Bilderzeugungsgerät (DMD, LCD, LCoS) zu befördern, das dem Fokussierungssystem (3, 4, 5, 5', 5", 6) nachgeschaltet ist, das mindestens eine Sammellinse (5, 5', 5"), insbesondere eine Relaislinse, und einen Spiegel (6) umfasst.

2. Ein Beleuchtungssystem für Videoprojektoren nach Anspruch 1, **dadurch gekennzeichnet, dass** der Videoprojektor mindestens ein (9) DMD-Gerät (digitales Mikrospiegelgerät) verwendet.

3. Ein Beleuchtungssystem für Videoprojektoren nach Anspruch 1, **dadurch gekennzeichnet, dass** der Videoprojektor drei (9, 9', 9") DMD-Geräte (digitale Mikrospiegelgeräte) verwendet.

4. Ein Beleuchtungssystem für Videoprojektoren nach Anspruch 1, **dadurch gekennzeichnet, dass** der Videoprojektor mindestens ein LCD-Gerät (Flüssigkristallgerät) verwendet.

5. Ein Beleuchtungssystem für Videoprojektoren nach Anspruch 1, **dadurch gekennzeichnet, dass** der Videoprojektor drei LCD-Geräte (Flüssigkristallgeräte) verwendet.

6. Ein Beleuchtungssystem für Videoprojektoren nach Anspruch 1, **dadurch gekennzeichnet, dass** der Videoprojektor mindestens ein LCoS-Gerät (Flüssigkristall auf Silizium) verwendet.

7. Ein Beleuchtungssystem für Videoprojektoren nach Anspruch 1, **dadurch gekennzeichnet, dass** der Videoprojektor drei LCoS-Geräte (Flüssigkristall auf Silizium) verwendet.

8. Ein Beleuchtungssystem für Videoprojektoren nach Anspruch 1, **dadurch gekennzeichnet, dass** das Verhältnis zwischen den Seiten der integrierenden Linse gleich dem Verhältnis zwischen den Seiten der aktiven Oberfläche des verwendeten Gerätes ist.

9. Ein Beleuchtungssystem für Videoprojektoren nach Anspruch 8, **dadurch gekennzeichnet, dass** das Verhältnis zwischen den Seiten 4:3 ist.

10. Ein Beleuchtungssystem für Videoprojektoren nach Anspruch 8, **dadurch gekennzeichnet, dass** das Verhältnis zwischen den Seiten 16:9 ist.

11. Ein Beleuchtungssystem für Videoprojektoren nach Anspruch 1, **dadurch gekennzeichnet, dass** es drei Diodenmatrices (1, 1', 1", 1"') einsetzt.

12. Ein Beleuchtungssystem für Videoprojektoren nach Anspruch 11, **dadurch gekennzeichnet, dass** jede Diodenmatrix (1, 1', 1", 1"') einen Lichtstrahl aussendet, der einer Grundfarbe (RGB) entspricht.

13. Ein Beleuchtungssystem für Videoprojektoren nach Anspruch 12, **dadurch gekennzeichnet, dass** die Lichtstrahlen, die von den Diodenmatrices (1, 1', 1", 1"') ausgesendet und von den entsprechenden integrierenden Linsen integriert werden, auf zwei Zweifarbenfilter (17, 18) treffen, die im Wesentlichen im Winkel von 90 Grad platziert sind.

14. Ein Beleuchtungssystem für Videoprojektoren nach Anspruch 1, **dadurch gekennzeichnet, dass** es mindestens eine Diodenmatrix (1"') verwendet, die in der Lage ist, weißes Licht auszusenden.

15. Ein Beleuchtungssystem für Videoprojektoren nach Anspruch 14, **dadurch gekennzeichnet, dass** die Diodenmatrix (1"') aus einer Vielzahl von Triaden besteht, von denen jede drei Leuchtdioden umfasst, wobei jede Leuchtdiode einen Lichtstrahl aussendet, der einer anderen Grundfarbe entspricht.

16. Ein Beleuchtungssystem für Videoprojektoren nach Anspruch 15, **dadurch gekennzeichnet, dass** die Leuchtdioden jeder Triade eine nach der anderen aktiviert werden können.

17. Ein Beleuchtungssystem für Videoprojektoren nach Anspruch 15, **dadurch gekennzeichnet, dass** jede Triade zu einer integrierenden Linse gehört.

18. Ein Beleuchtungssystem für Videoprojektoren nach Anspruch 1, **dadurch gekennzeichnet, dass** der Videoprojektor dazu verwendet wird, eine Frontprojektion durchzuführen.

19. Ein Beleuchtungssystem für Videoprojektoren nach Anspruch 1, **dadurch gekennzeichnet, dass** der Videoprojektor mit Rückprojektion arbeitet.

## Revendications

1. Système d'éclairage pour vidéoprojecteur utilisant une source de lumière, lequel comporte au moins une matrice de diodes électroluminescentes (DEL) (1, 1', 1", 1"') comportant une pluralité de diodes DEL, ledit système d'éclairage présentant un système d'intégration (2, 2', 2", 2"') comportant une pluralité de lentilles d'intégration, ledit système d'intégration (2, 2', 2", 2"') étant intercalé entre ladite matrice de diodes (1, 1', 1", 1"') et un système de focalisation subséquent ( 3, 4, 5, 5', 5", 6), chaque diode DEL étant associée à une lentille d'intégration,
**caractérisé en ce que**
ladite lentille d'intégration présente une distance focale sensiblement égale à la distance séparant ladite lentille d'intégration de ladite diode DEL associée, et **en ce que** ledit système de focalisation (3, 4, 5, 5', 5", 6) comporte :
- un condenseur asphérique (3) apte à concentrer un faisceau lumineux formé par ladite matrice de diodes (1,1', 1", 1"') à l'entrée d'une barre d'intégration (4), et
- un système de miroirs et de lentilles (5, 5', 5", 6) apte à recueillir le faisceau lumineux à la sortie de ladite barre d'intégration (4) et à transmettre ledit faisceau lumineux vers un dispositif de formation d'images (DMD, LCD, Lcos) situé en aval dudit système de focalisation (3 , 4, 5, 5', 5", 6), ledit système de miroirs et de lentilles (5, 5', 5", 6) comportant au moins une lentille convergente (5, 5', 5"), en particulier, une lentille de relais, et un miroir (6).

2. Système d'éclairage pour vidéoprojecteur selon la revendication 1, **caractérisé en ce que** ledit vidéoprojecteur utilise au moins un dispositif DMD (9) ou dispositif numérique à micro-miroirs (de l'anglais Digital Micromirror Device).

3. Système d'éclairage pour vidéoprojecteur selon la revendication 1, **caractérisé en ce que** ledit vidéoprojecteur utilise trois dispositifs DMD ou dispositifs numériques à micro-miroirs (9, 9', 9").

4. Système d'éclairage pour vidéoprojecteur selon la revendication 1, **caractérisé en ce que** ledit vidéoprojecteur utilise au moins un dispositif à cristaux liquides ou dispositif LCD.

5. Système d'éclairage pour vidéoprojecteur selon la revendication 1, **caractérisé en ce que** ledit vidéoprojecteur utilise trois afficheurs à cristaux liquides, ou dispositif LCD.

6. Système d'éclairage pour vidéoprojecteur selon la revendication 1, **caractérisé en ce que** ledit vidéoprojecteur utilise au moins un dispositif LcoS ou afficheur à cristaux liquides sur silicium (afficheur LcoS).

7. Système d'éclairage pour vidéoprojecteur selon la revendication 1, **caractérisé en ce que** ledit vidéoprojecteur utilise trois dispositifs LcoS ou afficheurs à cristaux liquides sur silicium (afficheurs LcoS).

8. Système d'éclairage pour vidéoprojecteur selon la revendication 1, **caractérisé en ce que** le rapport entre les côtés de ladite lentille d'intégration est égal au rapport entre les côtés de la surface active du dispositif utilisé.

9. Système d'éclairage pour vidéoprojecteur selon la revendication 8, **caractérisé en ce que** ledit rapport entre les côtés est 4/3.

10. Système d'éclairage pour vidéoprojecteur selon la revendication 8, **caractérisé en ce que** ledit rapport entre les côtés est 16/9.

11. Système d'éclairage pour vidéoprojecteur selon la revendication 1, **caractérisé en ce qu'**il emploie trois matrices de diodes (1,1',1",1"').

12. Système d'éclairage pour vidéoprojecteur selon la revendication 11, **caractérisé en ce que** chaque matrice de diodes (1, 1 1", 1"') émet un faisceau lumineux correspondant à une couleur primaire (RGB).

13. Système d'éclairage pour vidéoprojecteur selon la revendication 12, **caractérisé en ce que** lesdits faisceaux lumineux émis par lesdites matrices de diodes (1, 1 1", 1"') et intégrés par des lentilles d'intégration correspondantes percutent deux filtres dichroïques (17, 18) placés sensiblement à 90 degrés.

14. Système d'éclairage pour vidéoprojecteur selon la revendication 1, **caractérisé en ce qu'**il utilise au moins une matrice de diodes (1"') capable d'émettre une lumière blanche.

15. Système d'éclairage pour vidéoprojecteur selon la revendication 14, **caractérisé en ce que** ladite matrice de diodes (1"') comporte une pluralité de triades, dont chacune comporte trois diodes DEL, chaque diode DEL émettant un faisceau lumineux correspondant à une couleur primaire distincte.

16. Système d'éclairage pour vidéoprojecteur selon la revendication 15, **caractérisé en ce que** lesdites diodes DEL de chaque triade sont activables une par une.

17. Système d'éclairage pour vidéoprojecteur selon la revendication 15, **caractérisé en ce que** chaque triade est associée à une lentille d'intégration.

18. Système d'éclairage pour vidéoprojecteur selon la revendication 1, **caractérisé en ce que** ledit vidéoprojecteur est utilisé pour mettre en oeuvre une projection frontale.

19. Système d'éclairage pour vidéoprojecteur selon la revendication 1, **caractérisé en ce que** ledit vidéoprojecteur fonctionne en projection arrière.
